# EUROPEAN PATENT APPLICATION

(11) **EP 3 410 580 A1**
(43) Date of publication of application: **05.12.2018**
(21) Application number: 18173937.6
(22) Date of filing: 24.05.2018
(51) Int. Cl.: H02K 5/173

(54) **FAN MOTOR APPARATUS AND METHOD FOR MANUFACTURING THE SAME**

(30) Priority: 30.05.2017 JP 2017106673
(71) Applicant: Sanyo Denki Co., Ltd., Tokyo 170-8451 (JP)
(72) Inventor: Inada, Naoya, Tokyo, 170-8451 (JP); Kakeyama, Masato, Tokyo, 170-8451 (JP); Yanagisawa, Atsushi, Tokyo, 170-8451 (JP)
(74) Representative: Herzog, Fiesser & Partner Patentanwälte PartG mbB

(57) **Abstract**

A fan motor includes: a frame bushing part configured to house a rotation drive part; a bearing configured to rotatably support a shaft with respect to the frame bushing part; and at least one shaft fall-out restraining member provided on the shaft and configured to hold the bearing along an axial direction of the shaft.

## Description

### BACKGROUND

### 1. Technical Field

The present disclosure relates to a fan motor apparatus and a method for manufacturing the same.

### 2. Related Art

In terms of a technology for preventing a shaft of a fan motor apparatus from falling out, various structures have typically been proposed. In the fan motor apparatus, a snap ring is used for a fixing structure for a bearing and a shaft of the fan motor (refer to, for example, JP-A-2002-138989). Examples of snap rings include C type retaining rings and E type retaining rings.

### SUMMARY

A fan motor includes: a frame bushing part configured to house a rotation drive part; a bearing configured to rotatably support a shaft with respect to the frame bushing part; and at least one shaft fall-out restraining member provided on the shaft and configured to hold the bearing along an axial direction of the shaft.

### BRIEF DESCRIPTION OF THE DRAWINGS

Fig. 1 is a cross-sectional view (cross-sectional side view) illustrating an example of the configuration of a fan motor apparatus according to one embodiment of the present disclosure when viewed from the side;
Fig. 2 is a cross-sectional view of the main part of a fixing structure of Fig. 1; and
Fig. 3 is a cross-sectional view of the main part of a fixing structure of a known fan motor apparatus.

### DESCRIPTION OF EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

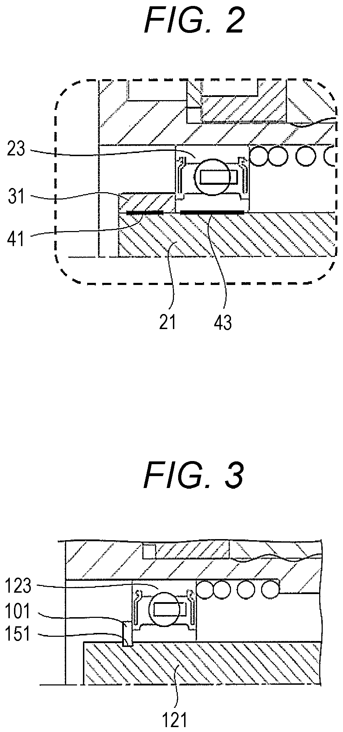

Fig. 3 illustrates an example of a fixing structure for a bearing and a shaft of a fan motor in a known fan motor apparatus, the fixing structure using a snap ring. Examples of snap rings include C type retaining rings and E type retaining rings.

As illustrated in Fig. 3, in the bearing fixing structure of the fan motor apparatus, which uses the snap ring, one end of a bearing 123 is fixed by a snap ring 101. The snap ring 101 is inserted into and fixed to a groove portion 151 formed on a shaft 121.

However, according to the structure illustrated in Fig. 3, the fixing structure is likely to break under an environment where a large axial load is generated in an extension direction of the shaft being a rotating axis of the fan motor. Hence, according to the structure illustrated in Fig. 3, the shaft is likely to fall out.

One object of the embodiment is to provide a fan motor apparatus having a fixing structure that restrains a shaft from falling out.

According to one aspect of the embodiment, a fan motor is provided which includes: a frame bushing part configured to house a rotation drive part (stator); a bearing configured to rotatably support a shaft with respect to the frame bushing part; and at least one shaft fall-out restraining member (shaft fall-out prevention-purpose member) provided on the shaft and configured to hold the bearing along an axial direction of the shaft (from a bearing non-holding direction).

The shaft fall-out restraining member is preferably a cylindrical retaining ring provided on the outer periphery of the shaft. The shaft fall-out restraining member (shaft fall-out restraining retaining ring or shaft fall-out prevention-purpose retaining ring) is preferably a press-fit retaining ring.

A press-fitting force of the shaft fall-out restraining member onto the shaft is preferably larger than a press-fitting force of the bearing onto the shaft.

According to one aspect of the embodiment, a method for manufacturing the fan motor according to any one of the above descriptions is provided which includes: press fitting the bearing onto the shaft with a first press-fitting force; and press fitting the shaft fall-out restraining member onto the shaft with a second press-fitting force larger than the first press-fitting force.

According to one aspect of the embodiment, it is possible to restrain a shaft from falling out in a fan motor apparatus.

A fan motor apparatus according to one embodiment of the present disclosure is described in detail hereinafter with reference to the drawings.

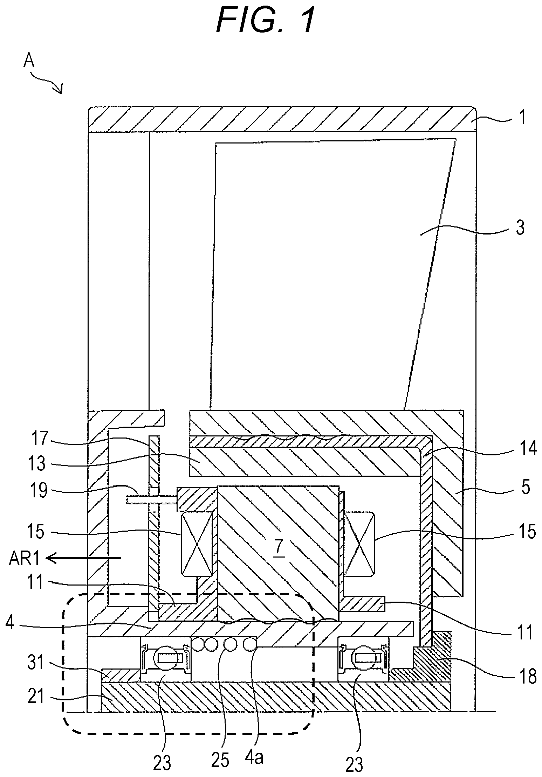

Fig. 1 is a cross-sectional view illustrating an example of the configuration of the fan motor apparatus according to the embodiment when viewed from the side. In other words, Fig. 1 is a cross-sectional view of a fan motor apparatus A taken along a plane passing the center of an axis of a rotary shaft. Fig. 2 is a cross-sectional view of the main part of a fixing structure of Fig. 1. The left side of Fig. 1 is an air blowing side AR1.

As illustrated in Figs. 1 and 2, the fan motor apparatus (fan motor) A according to the embodiment includes a frame 1, a blade 3, a frame bushing part (frame part) 4, a rotor cover 14, and a magnet 13. The rotor cover 14 is provided on an inner surface of a blade boss part 5. The magnet 13 is provided on an inner surface of the rotor cover 14. The rotor cover 14 is connected by a rotor bushing 18 to a shaft 21.

A rotation drive part (stator) is provided inside these members. The rotation drive part includes a stator core 7, a coil 15, and an insulator 11. The coil 15 is provided outside the stator core 7. The insulator 11 insulates the coil 15 from the stator core 7. A board 17 and a conductor 19 are provided on one side (the air blowing side AR1) of the rotation drive part. The conductor 19 extends from the rotation drive part to the board 17.

The shaft 21 is provided via a bearing 23, below the frame bushing part 4, where the rotation drive part is housed. The frame bushing part 4 is provided with a step portion 4a. A spring 25 is interposed between the step portion 4a and one end (a first end portion) of the bearing 23. Consequently, the bearing 23 is biased outward (toward the air blowing side) in Fig. 1. The first end portion of the bearing 23 may be one end, on an air inlet side of the fan motor apparatus, of the bearing 23. A shaft fall-out restraining member (shaft fall-out prevention-purpose retaining member) 31 is provided at a position where the shaft fall-out restraining member 31 is in contact with a second end portion of the bearing 23 on the other end (second end portion) side of the bearing 23. The second end portion of the bearing 23 may be one end, on the air blowing side of the fan motor apparatus, of the bearing 23. The shaft fall-out restraining member 31 fastens the bearing 23 along an axial direction of the shaft 21. It can also be said that the shaft fall-out restraining member 31 fastens the bearing 23 from a bearing non-holding direction (a direction opposite to the spring 25, or the air blowing side). The shaft fall-out restraining member 31 may be, for example, a cylindrical retaining ring provided on the outer periphery of the shaft 21. The shaft fall-out restraining retaining ring (shaft fall-out prevention-purpose retaining ring) 31 is fitted onto the shaft 21 by, for example, press fitting. The dimension of the ring-shaped shaft fall-out restraining retaining ring 31 in a shaft axial direction (hereinafter the axial direction) is larger than the dimension of the snap ring 101 of Fig. 3 in the axial direction. Furthermore, a contact area between the shaft fall-out restraining retaining ring 31 and the shaft 21 is large.

A press-fitting force (41) of the ring-shaped shaft fall-out restraining retaining ring 31 onto the shaft 21 is larger than a press-fitting force (43) of the bearing 23 onto the shaft 21. In other words, the ring-shaped shaft fall-out restraining retaining ring 31 is tightly fitted on the shaft 21.

In the above structure, the ring-shaped (cylindrical) shaft fall-out restraining retaining ring 31 is fitted by press fitting at the position where the shaft fall-out restraining retaining ring 31 is in contact with the end portion on the distal end side of the bearing 23. Consequently, the shaft fall-out restraining retaining ring 31 can fasten the bearing 23 in ring form. Therefore, the bearing 23 can be fixed more tightly than before.

In addition, a press-fitting portion 41 of the ring-shaped shaft fall-out restraining retaining ring 31 is formed. The press-fitting portion 41 of the shaft fall-out restraining retaining ring 31 has a larger press-fitting force than the press-fitting force of a press-fitting portion 43 of the bearing 23. Hence, the shaft 21 can be tightly fixed.

Therefore, even if a large load or a strong impact is applied in the axial direction, the influence of damage to a fan main body and a fan apparatus is reduced. Therefore, the reliability of the fan motor apparatus can be improved.

Moreover, according to one embodiment of the present disclosure, the fan motor apparatus having the fixing structure that restrains the shaft from falling out can be provided.

The configuration of the above embodiment is not limited to, for example, the configurations illustrated in the accompanying drawings. The embodiment of the present disclosure can be appropriately modified within the scope that exerts the effect of the present disclosure. In addition, the embodiment of the present disclosure can be appropriately modified and carried out without departing from the scope of the object of the present disclosure.

For example, the ring-shaped shaft fall-out restraining retaining ring 31 may not be formed on the entire periphery of the fan. A part of the shaft fall-out restraining retaining ring 31 may have a cut. With the cut, press fitting can be facilitated. In this case, the ring-shaped shaft fall-out restraining retaining ring 31 may be crimped and fixed after being press fitted.

Moreover, a ring-shaped press-fit retaining ring may be provided on each side of the bearing 23 in the shaft axial direction. Alternatively, a protrusion and a recess may be provided between the ring-shaped shaft fall-out restraining retaining ring 31, which partly has a cut, and the shaft 21 so as to fit the shaft fall-out restraining retaining ring 31 onto the shaft 21.

Moreover, each component of the present disclosure can be arbitrarily selected for use. The present disclosure also includes an invention including the selected configurations.

The embodiment of the present disclosure can be used for the fixing structure of the fan motor apparatus.

The embodiment of the present disclosure may be the following first to fourth fan motors, or first method for manufacturing a fan motor:
The first fan motor has: a frame bushing part configured to house a stator; and a bearing configured to rotatably support a shaft with respect to the frame bushing part, and includes a shaft fall-out prevention-purpose retaining member provided on the shaft and configured to hold the bearing from a bearing non-holding direction.

The second fan motor is the first fan motor, and the shaft fall-out prevention-purpose retaining member is a cylindrical retaining ring provided around the shaft.

The third fan motor is the second fan motor, and the shaft fall-out prevention-purpose retaining member is a press-fit retaining ring.

The fourth fan motor is the third fan motor, and a press-fitting force of the shaft fall-out prevention-purpose retaining member is larger than a press-fitting force of the bearing onto the shaft.

The first method for manufacturing a fan motor is a method for manufacturing any one of the first to fourth fan motors, and includes: press fitting the bearing onto the shaft with a first press-fitting force; and press fitting the shaft fall-out prevention-purpose retaining member onto the shaft with a second press-fitting force larger than the first press-fitting force.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A fan motor (A) comprising:
a frame bushing part (4) configured to house a rotation drive part;
a bearing (23) configured to rotatably support a shaft (21) with respect to the frame bushing part (4); and
at least one shaft fall-out restraining member (31) provided on the shaft (21) and configured to hold the bearing (23) along an axial direction of the shaft (21).

2. The fan motor (A) according to claim 1, wherein
the shaft fall-out restraining member (31) is a cylindrical retaining ring provided on the outer periphery of the shaft (21).

3. The fan motor (A) according to claim 2, wherein
the shaft fall-out restraining member (31) is a press-fit retaining ring.

4. The fan motor (A) according to claim 3, wherein
a press-fitting force of the shaft fall-out restraining member (31) onto the shaft (21) is larger than the press-fitting force of the bearing (23) onto the shaft (21).

5. A method for manufacturing the fan motor (A) according to any one of claims 1 to 4, the method comprising:
press fitting the bearing (23) onto the shaft (21) with a first press-fitting force; and
press fitting the shaft fall-out restraining member (31) onto the shaft (21) with a second press-fitting force larger than the first press-fitting force.
